# EUROPÄISCHE PATENTSCHRIFT

(11) **EP 3 734 565 B1**
(45) Veröffentlichungstag und Bekanntmachung des Hinweises auf die Patenterteilung: **24.05.2023**
(21) Anmeldenummer: 20181864.8
(22) Anmeldetag: 11.12.2017
(51) Int. Cl.: G08C 17/02, E01C 19/48

(54) **BAUMASCHINE**
CONSTRUCTION MACHINE
MACHINE DE CONSTRUCTION

(30) Priorität: 14.12.2016 DE 102016124341
(43) Veröffentlichungstag der Anmeldung: 04.11.2020
(62) Teilanmeldung aus: 17206382.8
(73) Patentinhaber: Hamm AG, 95643 Tirschenreuth (DE)
(72) Erfinder: Völkel, Werner, 92660 Neustadt (DE); Eichhorn, Christian, 92648 Vohenstrauß (DE)
(74) Vertreter: Ruttensperger Lachnit Trossin Gomoll

(56) Entgegenhaltungen:
- EP-A1- 1 845 196
- DE-A1-102007 041 512
- DE-A1-102008 049 945
- DE-A1-102011 088 567
- DE-U1-202016 101 808

## Beschreibung

Die vorliegende Erfindung betrifft eine Baumaschine, beispielsweise einen Bodenverdichter mit wenigstens einer Verdichterwalze, welche einen bezüglich eines Maschinenrahmens drehbaren Systembereich der Baumaschine bzw. des Bodenverdichters bildet.

Aus der EP 1 845 196 A1 ist eine in Form eines Straßenfertigers ausgebildete Baumaschine gemäß dem Oberbegriff des Anspruchs 1 bekannt. An dieser Baumaschine sind in Zuordnung zu verschiedenen Arbeitssystemen Sensoren vorgesehen. Die Ausgangssignale der Sensoren werden über Datenübertragungsmodule drahtlos zu einer Basisstation übertragen. Jedes sendende Modul weist, ebenso wie die Basisstation, eine Antenne zur drahtlosen Kommunikation auf.

Aus der DE 10 2011 088 567 A1 ist eine in Form eines Bodenverdichters mit einer Verdichterwalze ausgebildete Baumaschine bekannt. Im Inneren der Verdichterwalze sind über den Umfang verteilt mehrere als Beschleunigungssensoren ausgebildete Bewegungssensoren vorgesehen. Diese übertragen ihr Ausgangssignal zu einer Datensendeeinheit, welche mit einer am Maschinenrahmen, also einen nicht rotierenden Systembereich der Baumaschine, vorgesehenen Datenempfangseinheit in Funkverbindung steht, um durch die Bewegungssensoren bereitgestellte Information in einem am Maschinenrahmen ebenfalls vorgesehenen Datenauswertesystem auswerten zu können. Bei einer alternativen Ausgestaltung ist jedem Bewegungssensor eine eigene Datensendeeinheit zugeordnet, welche zur Signalübertragung in Funkverbindung mit der Datenempfangseinheit steht.

Es ist die Aufgabe der vorliegenden Erfindung, eine Baumaschine vorzusehen, bei welcher eine zuverlässige, fehlerfreie Übertragung von in einem rotierenden Systembereich bereitgestellter Information zu einem an einem nicht rotierenden Systembereich der Baumaschine vorgesehenen Datenauswertesystem gewährleistet ist.

Erfindungsgemäß wird diese Aufgabe gelöst durch eine Baumaschine gemäß Anspruch 1. Diese umfasst:
- einen bezüglich eines Maschinenrahmens um eine Drehachse drehbaren Systembereich, wobei der drehbare Systembereich eine Verdichterwalze eines Bodenverdichters ist,
- an dem drehbaren Systembereich wenigstens einen Sensor, eine Datensendeeinheit mit wenigstens einer Sendeantenne und eine erste Datenübertragungsanordnung zur Übertragung von Daten von dem wenigstens einen Sensor zu der Datensendeeinheit,
- an dem Maschinenrahmen eine Datenempfangseinheit mit wenigstens einer Empfangsantenne, ein Datenauswertesystem und eine zweite Datenübertragungsanordnung zur Übertragung von Daten von der Datenempfangseinheit zu dem Datenauswertesystem,
wobei die Datensendeeinheit wenigstens zwei Sendeantennen aufweist. Die Datenempfangseinheit kann wenigstens zwei Empfangsantennen aufweisen.

Für eine zuverlässige Informationsübertragung aus dem rotierenden Systembereich in den nicht rotierenden Systembereich ist der Datensendeeinheit ein Signalteiler zum Verteilen des Ausgangssignals der Datensendeeinheit auf mehrere Sendeantennen zugeordnet, derart, dass alle Sendeantennen gleichzeitig und ohne Unterbrechung im Wesentlichen das gleiche Ausgangssignal senden.

Da bei der erfindungsgemäß ausgebildeten Baumaschine mehrere Sendeantennen oder/und mehrere Empfangsantennen genutzt werden, um das von der Datensendeeinheit auszugebende und per Funk zu übertragende Signal zu senden bzw. zu empfangen, ist gewährleistet, dass unabhängig von der Drehpositionierung des drehbaren Systembereichs der Baumaschine eine zuverlässige Funkverbindung zwischen zumindest einer Sendeantenne und zumindest einer Empfangsantenne besteht. Die Gefahr einer Unterbrechung oder Störung der Funkverbindung aufgrund eines während der Rotation des drehbaren Systembereichs vorübergehend zu großen Abstands zwischen einer Sendeantenne und eine Empfangsantenne kann somit eliminiert werden.

Um gemäß einem weiteren vorteilhaften, nicht zwingend mit dem vorangehend diskutierten Aspekt zu kombinierenden Aspekt der vorliegenden Erfindung zwischen dem wenigstens einen Sensor und der Datensendeeinheit bzw. zwischen der Datenempfangseinheit und dem Datenauswertesystem zuverlässig die Übertragung großer Datenmengen gewährleisten zu können, wird vorgeschlagen, dass die erste Datenübertragungsanordnung ein erstes Datenbussystem umfasst, oder/und dass die zweite Datenübertragungsanordnung ein zweites Datenbussystem umfasst. Insbesondere kann dabei vorgesehen sein, dass das erste Datenbussystem oder/und das zweite Datenbussystem ein CAN-Datenbussystem umfasst. Von besonderem Vorteil ist dabei, wenn sowohl im drehbaren Systembereich als auch im Bereich des Maschinenrahmens gleiche Datenbussysteme verwendet werden, so dass eine Umsetzung der zwischen der Datensendeeinheit und der Datenempfangseinheit übertragenen Daten nicht erforderlich ist.

Um unabhängig von der die Positionierung des drehbaren Systembereichs eine permanente und zuverlässige Funkverbindung zwischen der Datensendeeinheit und der Datenempfangseinheit zu gewährleisten, wird vorgeschlagen, dass wenigstens zwei Sendeantennen oder/und wenigstens zwei Empfangsantennen vorzugsweise mit einem Winkelabstand im Bereich von 90° bis 180° zueinander angeordnet sind.

Zur Bereitstellung umfassender Information über den Bewegungszustand des drehbaren Systembereichs kann eine Mehrzahl von als Bewegungssensoren ausgebildeten Sensoren vorzugsweise mit gleichmäßigem Winkelabstand zueinander vorgesehen sein.

Wenigstens ein als Bewegungssensor ausgebildeter Sensor kann ein Beschleunigungssensor sein. Da der drehbare Systembereich eine Verdichterwalze ist, kann wenigstens ein Sensor vorgesehen sein, welcher Information über die Positionierung oder/und die Bewegung wenigstens einer Unwuchtmasse einer Unwuchtmassenanordnung bereitstellt. Eine derartige Unwuchtmassenanordnung kann beispielsweise in einer Verdichterwalze vorgesehen sein, um im Verdichtungsbetrieb der um ihre Drehachse sich drehenden Verdichterwalze eine Oszillationsbewegung, also eine periodische Hin- und Herbewegung in Umfangsrichtung, oder/und eine Vibrationsbewegung, also eine periodische Hin- und Herbewegung in vertikaler Richtung, zu überlagern. Alternativ oder zusätzlich kann beispielsweise an oder in einer Verdichterwalze zumindest ein Temperatursensor vorgesehen sein, um Information über die

Temperatur im Inneren des drehbaren Systembereichs oder an dessen Außenumfang bereitzustellen.

Insbesondere dann, wenn zur Informationsübertragung zu der Datensendeeinheit ein Datenbussystem genutzt wird, wird vorgeschlagen, dass wenigstens ein Sensor zur Ausgabe eines digitalen Sensorsignals ausgebildet ist.

Zur Versorgung der im drehbaren Systembereich vorgesehenen Baugruppen mit elektrischer Energie kann eine Gleichspannungs-Energieversorgungsanordnung vorgesehen sein. Dabei kann eine zuverlässige und effiziente Energieübertragung von dem nicht drehbaren Systembereich, also vom Bereich des Maschinenrahmens, in den drehbaren Systembereich, beispielsweise dadurch bereitgestellt werden, dass die Gleichspannung-Energieversorgungsanordnung eine Induktions-Energieübertragungsanordnung zur drahtlosen Energieübertragung in den drehbaren Systembereich umfasst, wobei die Induktions-Energieübertragungsanordnung eine Senderanordnung mit wenigstens einer Senderspule und an dem drehbaren Systembereich eine Empfängeranordnung mit wenigstens einer Empfängerspule umfasst.

Um dabei eine von der Drehpositionierung des drehbaren Systembereichs im Wesentlichen unabhängige, zuverlässige Energieübertragung bereitstellen zu können, wird vorgeschlagen, dass die Empfängeranordnung eine Mehrzahl von vorzugsweise in Umfangsrichtung um die Drehachse aufeinanderfolgend angeordneten Empfängerspulen umfasst, oder/und dass die Senderanordnung wenigstens zwei vorzugsweise in Umfangsrichtung um die Drehachse aufeinanderfolgend angeordnete Senderspulen umfasst.

Um ein einfach in einen drehbaren Systembereich zu integrierendes System bereitzustellen, wird vorgeschlagen, dass die Induktions-Energieübertragungsanordnung eine Mehrzahl von in Umfangsrichtung aufeinanderfolgenden Trägern umfasst, wobei an jedem Träger wenigstens eine Empfängerspule vorgesehen ist, und dass an wenigstens einem Träger wenigstens ein Sensor vorgesehen ist oder/und an einem Träger die Datensendeeinheit vorgesehen ist oder/und an wenigstens einem Träger, vorzugsweise wenigstens zwei Trägern, eine Sendeantenne vorgesehen ist.

Die vorliegende Erfindung wird nachfolgend mit Bezug auf die beiliegenden Figuren detailliert beschrieben. Es zeigt:
- Fig. 1: einen Bodenverdichter;
- Fig. 2: in prinzipartiger Darstellung eine in Zuordnung zu einer Verdichterwalze des Bodenverdichters der Fig. 1 vorgesehene Induktions-Energieübertragungsanordnung;
- Fig. 3: in prinzipartiger Darstellung die Zusammenwirkung einer Senderspule mit einer Empfängerspule;
- Fig. 4: den grundsätzlichen Aufbau der Senderanordnung mit einer Senderspule und einem dieser zugeordneten Resonanzkreis;
- Fig. 5: in prinzipieller Axialansicht eine Verdichterwalze des in Fig. 1 dargestellten Bodenverdichters mit den daran vorgesehenen Baugruppen zur Bereitstellung und Übertragung von Information zu einem nicht rotierenden Systembereich des Bodenverdichters;
- Fig. 6: eine blockbildartige Darstellung des bei den Bodenverdichter der Figur 1 eingesetzten Systems zur Übertragung von Information aus der Verdichterwalze zu einem. am Maschinenrahmen des Bodenverdichters vorgesehenen Datenauswertesystem.

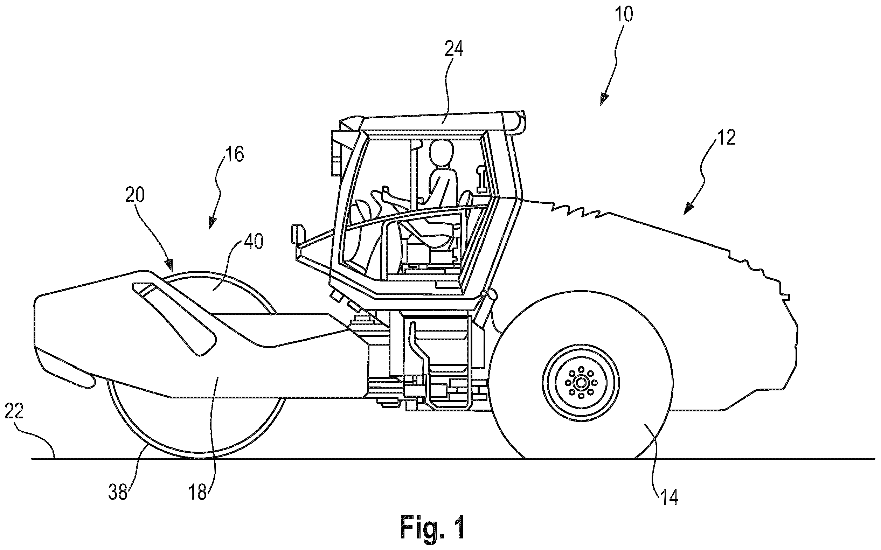

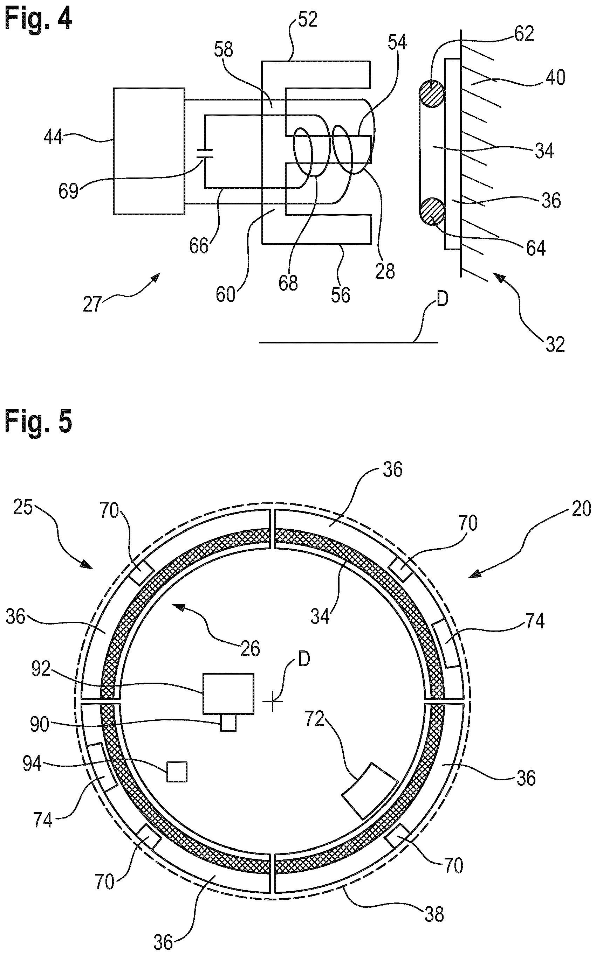

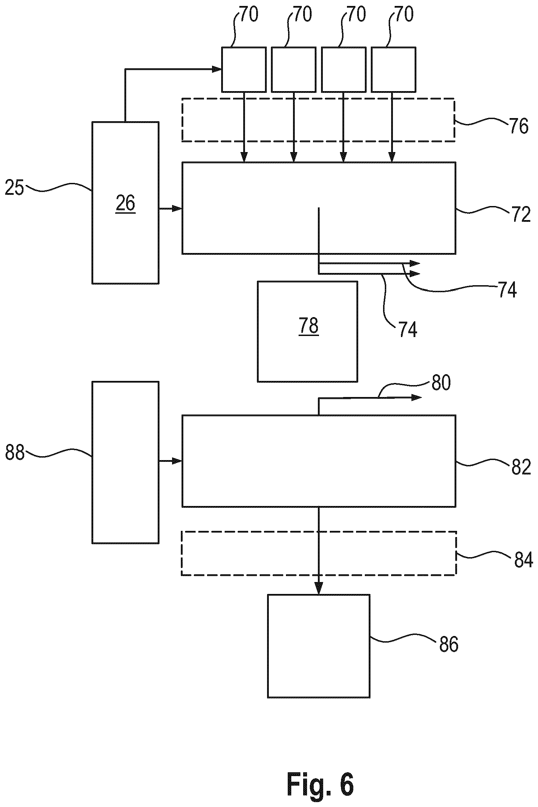

Bevor nachfolgend mit Bezug auf die Fig. 5 und 6 die Übertragung von Daten außerdem rotierenden Systembereich einer Baumaschine zu einem nicht rotierenden Systembereich einer Baumaschine detailliert erläutert wird, wird zunächst mit Bezug auf die Fig. 1-4 anhand eines Beispiels dargestellt, wie elektrische Energie in den rotierenden Systembereich einer Baumaschine ein gekoppelt werden kann, um die dort zur Informationserfassung und Übertragung angeordneten Komponenten mit elektrischer Energie speisen zu können.

In Fig. 1 ist eine in Form eines Bodenverdichters 10 ausgeführte Baumaschine in Seitenansicht erkennbar. Der Bodenverdichter 10 umfasst einen Hinterwagen 12 mit durch ein dort auch vorgesehenes Antriebsaggregat angetriebenen Antriebsrädern 14. Ein bezüglich des Hinterwagens 12 schwenkbarer Vorderwagen 16 umfasst einen Maschinenrahmen 18, an welchem eine Verdichterwalze 20 um eine zur Zeichenebene der Fig. 1 im Wesentlichen orthogonale Drehachse drehbar ist, um bei der Voranbewegung des Bodenverdichters 10 einen Untergrund 22 zu verdichten. Im Sinne der vorliegenden Erfindung sind der die Verdichterwalze 20 tragende Maschinenrahmen 18 sowie der Hinterwagen 12 als Bestandteile des gesamten Maschinenrahmens des Bodenverdichters 10 zu verstehen.

Im Inneren der Verdichterwalze 20 können verschiedene Mechanismen vorgesehen sein, um zusätzlich zur Abrollbewegung derselben eine Oszillationsbewegung oder eine Vibrationsbewegung zu erzeugen. Zur Erfassung des Bewegungszustands der Verdichterwalze 20 sind im Inneren derselben Bewegungssensoren, beispielsweise Beschleunigungssensoren, vorgesehen sein, die mit einer Datensendeeinheit verbunden sind, um Information über den Bewegungszustand der Verdichterwalze zu einer beispielsweise im Bereich einer Führerkabine 24 am Hinterwagen 12 angeordneten Empfangseinheit zu senden. Die im Inneren der Verdichterwalze 20 angeordneten Sensoren bzw. auch die Datensendeeinheit sind Verbraucher elektrischer Energie, die zum Bereitstellen der Sensorsignale bzw. zum Übertragen derselben als Funksignale mit elektrischer Energie versorgt werden müssen.

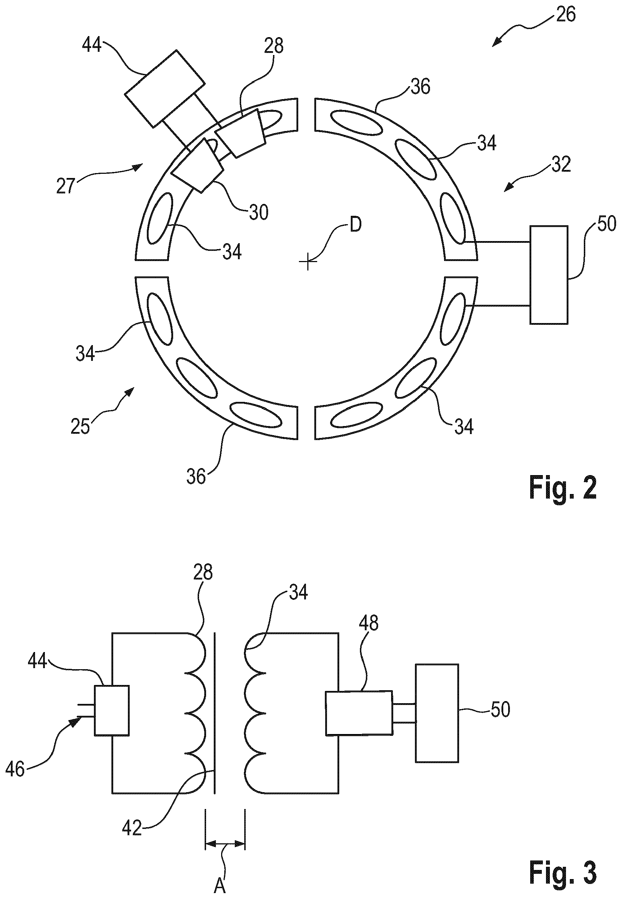

Nachfolgend wird mit Bezug auf die Fig. 2-4 beschrieben, wie gemäß den Prinzipien der vorliegenden Erfindung derartige Verbraucher elektrischer Energie in einem rotierenden Systembereich, also der Verdichterwalze 20 des beispielhaft dargestellten Bodenverdichters 10, mit elektrischer Energie gespeist werden können.

Eine in den Fig. 2-4 im Wesentlichen in prinzipartigen Darstellungen veranschaulichte Gleichspannungs-Energieversorgungsanordnung 25 in Form einer Induktions-Energieübertragungsanordnung 26 umfasst im dargestellten Beispiel eine Senderanordnung 27 mit zwei Senderspulen 28, 30. Diese sind an einer mit dem drehbaren Systembereich, also der Verdichterwalze 20, nicht drehbaren Baugruppe, beispielsweise bezüglich des Maschinenrahmens 18 feststehend, getragen. Die beiden Senderspulen 28, 30 können dabei so angeordnet sein, dass sie in Umfangsrichtung um die Drehachse des drehbaren Systembereichs, also der Verdichterwalze 20, aufeinanderfolgend angeordnet sind.

An dem rotierenden Systembereich, also im dargestellten Beispiel der Verdichterwalze 20, ist eine allgemein mit 32 bezeichnete Empfängeranordnung vorgesehen. Diese umfasst eine Vielzahl von beispielsweise ebenfalls in Umfangsrichtung um die Drehachse D aufeinander folgend angeordneten Empfängerspulen 34, die in der Umfangsrichtung langgestreckt ausgebildet sind. Im dargestellten Beispiel sind jeweils drei derartige Empfängerspulen 34 an einem kreissegmentartig ausgebildeten Träger 36 getragen. Die insgesamt vier kreissegmentartigen Träger 36 können in der in Fig. 2 dargestellten kreisartigen Konfiguration an dem rotierenden Systembereich, also der Verdichterwalze 20, beispielsweise an einer diese axial abschließenden und einen Walzenmantel 38 tragenden Scheibe 40, festgelegt werden. Die Empfängerspulen 34 sind bezüglich der Drehachse D derart angeordnet, dass sie näherungsweise in demjenigen radialen Bereich liegen, in welchem auch die Senderspulen 28, 30 positioniert sind.

Die Wechselwirkung der Empfängerspulen 34 mit der Senderanordnung 27 bzw. den beiden Senderspulen 28, 30 derselben, wird mit Bezug auf die Fig. 3 und 4 beschrieben.

Die Fig. 3 zeigt beispielhaft die Senderspule 28, welche eine oder mehrere einen schematisch dargestellten Kern 42 vorzugsweise aus Metallmaterial umgebende Windungen aufweisen kann. Die Senderspule 28 steht in Verbindung mit einem Frequenzgenerator 44, welcher mit einem Eingangsbereich 46 an das Bordspannungssystem des Bodenverdichters 10 angeschlossen sein kann und durch dieses beispielsweise mit einer 12V-Gleichspannung versorgt wird. Der Frequenzgenerator 44 erzeugt aus dieser Gleichspannung ein hochfrequentes Wechselspannungssignal, z.B. mit einer Frequenz im Bereich von 100 kHz, und legt dieses an die Senderspule 28 an. Diese erzeugt, verstärkt durch den Kern 42, ein entsprechend hochfrequentes Magnet-Wechselfeld, welches in der in Fig. 3 der Senderspule 28 gegenüberliegenden Empfängerspule 34 eine entsprechende Wechselspannung bzw. einen entsprechenden Wechselstrom induziert. Ein der Empfängerspule 34 zugeordneter Gleichrichter 48 erzeugt aus dieser Wechselspannung eine Gleichspannung, beispielsweise ebenfalls mit 12V, welche an den bzw. die in der Verdichterwalze 20 vorgesehenen Verbraucher elektrischer Energie 50 angelegt werden kann, um diese somit mit elektrischer Energie zu speisen.

Bei Rotation der Verdichterwalze 20 bewegen sich sukzessive die in Umfangsrichtung aufeinander folgenden Empfängerspulen 34 mit einem in Richtung der Drehachse D belassenen Abstand A von etwa 20 mm an der bzw. den Senderspulen 28, 30 vorbei. Während jeder Phase, in welcher eine bzw. mehrere der Empfängerspulen 34 in magnetischer Wechselwirkung mit den Senderspulen 28, 30 ist bzw. sind, wird in den betroffenen Empfängerspulen 34 durch magnetische Induktion eine Wechselspannung bzw. ein Wechselstrom generiert. Da in Zuordnung zu jeder Empfängerspule 34 ein eigenständiger Gleichrichter 48 vorgesehen ist und alle Empfängerspulen 34 bzw. die zugeordneten Gleichrichter 48 zueinander parallel geschaltet sind, ist für eine auch im Rotationsbetrieb im Wesentlichen konstante Versorgung der Verbraucher 50 gesorgt. Dazu trägt insbesondere auch bei, dass die Senderanordnung 27 mehrere, im dargestellten Beispiel zwei, in Umfangsrichtung aufeinanderfolgende Senderspulen 28, 30 umfasst, die jeweils in Erregungswechselwirkung mit dem Frequenzgenerator 44 stehen, so dass der Umfangsbereich, in welchem eine magnetische Wechselwirkung zwischen der Senderanordnung 27 und der Empfängeranordnung 32 generiert wird, derart ausgedehnt ist, dass immer zumindest eine der Empfängerspulen 34 zur Erzeugung einer Wechselspannung durch das magnetische Wechselfeld erregt wird.

Die Fig. 4 veranschaulicht ein Beispiel für den Aufbau der Senderspulen 28, 30, beispielsweise der Senderspule 28 bzw. deren Wechselwirkung mit dem zugeordneten Kern 42. Dieser im Allgemeinen aus Metallmaterial aufgebaute Kern 42 ist im dargestellten Beispiel E-förmig und weist drei E-Schenkel 52, 54, 56 sowie diese miteinander jeweils verbindende E-Stege 58, 60 auf. Um den mittleren der E-Schenkel, also den E-Schenkel 54, ist die eine oder mehrere Windungen umfassende Senderspule 28 gewickelt. Der Kern 42 ist im Wesentlichen so angeordnet, dass die E-Schenkel 52, 54, 56 sich näherungsweise in der Richtung der Drehachse D und auf die Verdichterwalze 20 bzw. die daran vorgesehenen Empfängerspulen 34 zu orientiert sind. Dabei ist vorzugsweise der von der Senderspule 28 umgebene mittlere E-Schenkel 54 in radialer Richtung so positioniert, dass er näherungsweise zentral zwischen einem radial äußeren Spulenbereich 62 und einem radial inneren Spulenbereich 64 einer jeweiligen Empfängerspule 34 positioniert ist. Die beiden äußeren E-Schenkel 52, 56 können diesen radial äußeren bzw. radial inneren Spulenbereichen 62, 64 näherungsweise gegenüberliegend positioniert sein.

Auf diese Art und Weise wird eine sehr effiziente magnetische Wechselwirkung zwischen der Senderspule 28 und den periodisch sich daran vorbeibewegenden Empfängerspulen 34 gewährleistet werden, wobei diese Empfängerspulen 34 eine oder mehrere nicht notwendigerweise einen Kern umgebende Windungen umfassen.

Um den Wirkungsgrad bei der Energieübertragung von der Senderanordnung 27 auf die Empfängeranordnung 32 zu steigern, ist vorzugsweise in Zuordnung zu jeder Senderspule 28, 30 ein elektrischer Resonanzkreis 66 vorgesehen. Dieser umfasst einen in sich geschlossenen elektrischen Kreis mit einer Resonanzkreisspule 68 und einem Resonanzkreiskondensator 69. Der Resonanzkreis 66 weist somit eine durch die Induktivität der Resonanzkreisspule 68 und die Kapazität des Resonanzkreiskondensators 69 im Wesentlichen definierte Resonanzfrequenz auf. Diese entspricht im Wesentlichen der durch den Frequenzgenerator 44 bereitgestellten Frequenz der an die Senderspule 28 anzulegenden Wechselspannung. Um hier eine möglichst exakte Abstimmung vornehmen zu können, kann beispielsweise der Generator 44 in seiner Frequenz abstimmbar sein, um durch geringfügige Variation dieser Frequenz eine Anpassung an die Resonanzfrequenz des Resonanzkreises 66 vornehmen zu können. Alternativ oder zusätzlich kann beispielsweise auch der Resonanzkreiskondensator 69 in seiner Kapazität veränderbar sein, um die Resonanzfrequenz des Resonanzkreises 66 an die durch den Frequenzgenerator 44 bereitgestellte Frequenz der Wechselspannung anzupassen.

Die Resonanzkreisspule 68 kann, den Kern 42 umgebend, in unmittelbarer Nähe zur Senderspule 28 positioniert sein. Beispielsweise können diese beiden Spulen nebeneinander liegend den gleichen Bereich des Kerns 42, also im dargestellten Beispiel den mittleren E-Schenkel 54 umgebend, angeordnet sein. Grundsätzlich könnte auch eine der Spulen die andere an ihren Außenumfangsbereich umgebend angeordnet werden, so dass eine in Richtung der Drehachse sehr kompakte Bauweise erreicht werden kann.

Bei Beaufschlagung der Senderspule 28 mit der durch den Frequenzgenerator 44 erzeugten Wechselspannung wird der Resonanzkreis 66 zur Schwingung angeregt, wobei aufgrund der vorangehend angesprochenen Frequenzabstimmung der Resonanzkreis 66 mit seiner Resonanzfrequenz und somit sehr hoher Amplitude schwingen wird. Dies verstärkt das durch die Senderspule 28 generierte Magnet-Wechselfeld. Durch den Einsatz eines derartigen Resonanzkreises 66 in Zuordnung zu einer jeweiligen Senderspule 28 bzw. 30 kann der Wirkungsgrad der Induktions-Energieübertragungsanordnung auf etwa 45% gesteigert werden, so dass bei einer Leistungsaufnahme des Frequenzgenerators 44 von etwa 15 W die den Empfängerspulen 34 zugeordneten Gleichrichter 48 eine Leistungsabgabe von etwa 7 W bereitstellen.

Es sei darauf hingewiesen, dass die insbesondere in den Fig. 2-4 im Wesentlichen in prinzipartiger Gestalt dargestellte Induktions-Energieübertragungsanordnung 26 in verschiedensten Aspekten variiert werden kann. So können selbstverständlich mehr oder auch weniger als die dargestellten Empfängerspulen 34 in Umfangsrichtung aufeinanderfolgend angeordnet sein. Auch können radial gestaffelte Ringe von in Umfangsrichtung aufeinander folgenden Empfängerspulen 34 vorgesehen sein, wobei diese vorzugsweise dann in Umfangsrichtung zueinander versetzt liegen. Auch die Anzahl der Senderspulen der Senderanordnung 27 kann variiert werden, ebenso wie der Aufbau der Senderspulen bzw. der mit diesen zusammenwirkenden Kerne. So müssen diese Kerne nicht notwendigerweise E-förmig sein. Auch eine U-förmige oder eine im Wesentlichen halbkreisförmige Gestalt dieser Kerne kann vorgesehen sein. Die Senderspulen können beispielsweise auch an einem der äußeren E-Schenkel vorgesehen sein oder in einem zwei E-Schenkel oder zwei U-Schenkel miteinander verbindenden Stegbereich.

Die Fig. 5 zeigt in prinzipartiger Axialansicht die Verdichterwalze 20. An der Verdichterwalze 20 sind die vorangehend detailliert beschriebenen Träger 36 mit dem in Fig. 5 nur prinzipartig dargestellten Empfängerspulen 34 der Induktions-Energieübertragungsanordnung 26 vorgesehen. Bei dem in Fig. 5 dargestellten Beispiel ist an jedem der Träger 36 ein Sensor, beispielsweise ein in Form eines Beschleunigungssensors bereitgestellter Bewegungssensor 70, getragen. Ferner ist an der Verdichterwalze 20 eine allgemein mit 72 bezeichnete Datensendeeinheit vorgesehen, die beispielsweise im Inneren des Walzenmantels 38 an diesem getragen sein kann oder beispielsweise an einem der Träger 36 getragen sein kann. An zwei einander diametral gegenüberliegenden Trägern 36 ist jeweils eine Sendeantenne 74 getragen, so dass, wie in Fig. 5 deutlich erkennbar, die beiden Sendeantennen einen Winkelabstand von etwa 180° bezüglich der Drehachse D aufweisen.

Wie nachfolgend mit Bezug auf die Fig. 6 beschrieben, stehen die Bewegungssensoren 70 in Datenübertragungsverbindung mit der Datensendeeinheit 72, welche wiederum in Verbindung mit den beiden Sendeantennen 74 steht, um die durch die Bewegungssensoren 70 bereitgestellte Information zu einem am Bodenverdichter 10 an dessen Maschinenrahmen, beispielsweise im Bereich des Hinterwagens 12 getragenen Datenauswertesystem leiten zu können.

Die Fig. 6 zeigt die vier Bewegungssensoren 70, welche über ein allgemein mit 76 bezeichnetes Datenbussystem zur Datenübertagung mit der Datensendeeinheit 72 gekoppelt sind. Das Datenbussystem 76 ist vorzugsweise ein CAN-Datenbussystem, welches die von den Bewegungssensoren 70 in digitaler Form ausgegebenen Informationen bzw. Daten zur Datensendeeinheit 72 leitet. Um die von den Sensoren 70 ausgegebenen Signale in digitaler Form bereitstellen zu können, kann beispielsweise jedem Sensor 70 ein CAN-Transceiver zugeordnet sein, welcher die grundsätzlich in analoger Form bereitgestellten Erfassungssignale in ein zur Übertragung durch das als CAN-Datenbussystem ausgebildete Datenbussystem 76 geeignetes Datenformat umwandelt. Sowohl die Bewegungssensoren 70 als auch die Datensendeeinheit 72 werden von der vorangehend detailliert beschriebenen Gleichspannungs-Energieversorgungsanordnung 25 mit einer Gleichspannung beispielsweise von 12 V versorgt.

Die von der Datensendeeinheit 72 über das Datenbussystem 76 empfangenen Daten bzw. Signale werden von der Datensendeeinheit 72 als zur Funkübertragung geeignete Signale auf die beiden Sendeantennen 74 verteilt. Zu diesem Zwecke ist der Datensendeeinheit 72 ein Signalteiler zugeordnet bzw. in diese integriert, welcher beide Sendeantennen 74 gleichzeitig und permanent mit dem gleichen Signal beaufschlagt, so dass beide Sendeantennen 74 permanent im Wesentlichen das gleiche Ausgangssignal, also jeweils ein Ausgangssignal mit gleichem Informationsgehalt, senden.

Wie durch einen Block 78 veranschaulicht, kann die Funkübertragung vermittels eines modifizierten WIFI-Signals in einem Frequenzbereich von etwa 2,49 GHz mit einem CAN-Datenbus-Protokoll und einer Datenübertragungsrate von etwa 500 kbit/s erfolgen. Eine am Bodenverdichter 10 nahe der Verdichterwalze 20 an einem nicht rotierenden Systembereich, beispielsweise am Maschinenrahmen 18 an einer der Verdichterwalze 20 axial gegenüberliegenden Innenseite desselben, positionierte Empfangsantenne 80 einer Datenempfangseinheit 82 empfängt die von den beiden Sendeantennen 74 abgegebenen Signale und leitet diese über ein Datenbussystem 84 zu einem Datenauswertesystem 86 weiter. Auch das Datenbussystem 84 ist vorzugsweise als CAN-Datenbussystem ausgebildet, so dass die von der Datenempfangseinheit 82 empfangenen Signale im Wesentlichen ohne Umsetzung in ein anderes Datenformat über das Datenbussystem 84 zum Datenauswertesystem 86 übertragen werden können. Die Datenempfangseinheit 82 kann, ebenso wie alle am nicht rotierenden Systembereich des Bodenverdichters 10 vorgesehenen Komponenten oder Baugruppen, aus dem allgemein mit 88 bezeichneten Bordspannungssystem mit elektrischer Energie gespeist werden.

Die im dem Datenauswertesystem 86 empfangenen Daten können dann zur Bereitstellung von Information über den Bewegungszustand der Verdichterwalze 20 ausgewertet werden. Das Datenauswertesystem 86 kann beispielsweise einen Mikrocontroller umfassen, der in Kombination von Hardware und Software dazu ausgebildet bzw. programmiert ist, die gewünschte Signalauswertung vorzunehmen.

Da bei dem mit Bezug auf die Fig. 6 beschriebenen Aufbau im rotierenden Systembereich mit Umfangsabstand zueinander angeordnete Sendeantennen 74 vorgesehen sind, wird gewährleistet, dass diese im Drehbetrieb der Verdichterwalze 20 sich periodisch an der Empfangsantenne 80 vorbeibewegenden Sendeantennen 74 bzw. zumindest jeweils eine davon in Funkübertragungsverbindung mit der Empfangsantenne 80 steht. Somit kann unabhängig von der Drehpositionierung der Verdichterwalze 20 eine permanente Datenübertragungsverbindung zwischen der Datensendeeinheit 72 und der Datenempfangseinheit 82 und somit eine unterbrechungsfreie und fehlerfreie Kommunikation gewährleistet werden.

Es ist darauf hinzuweisen, dass selbstverständlich die Sendeantennen 74 auch mit anderer Winkelpositionierung, beispielsweise einem Winkelabstand von 90° zueinander, positioniert sein können, und dass beispielsweise auch mehr als zwei derartige Sendeantennen über den Umfang verteilt mit vorzugsweise gleichmäßigem Winkelabstand angeordnet sein können. Bei einer alternativen Ausgestaltung könnten beispielsweise am Maschinenrahmen 18 in einem der Verdichterwalze 20 zugewandten Bereich mehrere über den Umfang um die Drehachse D verteilt angeordnete Empfangsantennen 80 vorzugsweise mit gleichmäßigem Umfangsabstand positioniert sein, an welchen beispielsweise eine einzige Sendeantenne sich im Drehbetrieb der Verdichterwalze 20 vorbeibewegt. Auch auf diese Art und Weise kann für eine permanente und zuverlässige Funkübertragungsverbindung zwischen dem rotierenden Systembereich um dem nicht rotierenden Systembereich gesorgt werden. Grundsätzlich könnten auch mehrere Sendeantennen am rotierenden Systembereich und mehrere Empfangsantennen am nicht rotierenden Systembereich vorgesehen sein. In Verbindung mit dem Einsatz von Datenbussystemen zur Datenübertragung sowohl im rotierenden Systembereich, als auch im nicht rotierenden Systembereich wird somit eine zuverlässige Übertragung großer Datenmengen zwischen dem rotierenden Systembereich und dem nicht rotierenden Systembereich gewährleistet.

In Fig. 5 ist ferner veranschaulicht, dass, alternativ oder zusätzlich zu den als Bewegungssensoren 70 ausgebildeten Sensoren, an der Verdichterwalze 20 auch andere Sensoren vorgesehen sein können. So können ein oder mehrere Sensoren 90 vorgesehen sein, welche Information über die Position oder/und die Bewegung einer oder mehrerer Unwuchtmassen einer allgemein mit 92 bezeichneten und in der Verdichterwalze 20 vorgesehenen Unwuchtmassenanordnung bereitstellen. Diese Unwuchtmassenanordnung 92 kann um zur Drehachse D parallele oder zu dieser konzentrische Drehachsen in Rotation versetzbaren Unwuchtmassen aufweisen, so dass im Rotationsbetrieb derartiger Unwuchtmassen der Drehbewegung der Verdichterwalze 20 eine Oszillationsbewegung bzw. eine Vibrationsbewegung überlagert werden kann. Auch ist es möglich, an bzw. in der Verdichterwalze 20 einen oder mehrere Temperatursensoren 94 vorzusehen, um Information über die Temperatur im Inneren der Verdichterwalze 20 oder an deren Außenumfang bereitzustellen. Auch weitere hier nicht explizit dargestellte Sensoren, welche dazu in der Lage sind, Information zu erfassen und zu übermitteln, welche mit dem Arbeitsbetrieb einer derartigen Verdichterwalze 20 bzw. allgemein eines drehbaren Systembereichs steht, können an bzw. in dem drehbaren Systembereich, im dargestellten Beispiel der Verdichterwalze 20, vorgesehen sein. Auch derartige Sensoren können dazu ausgebildet sein, ein digitales Signal auszugeben bzw. können mit digitale Signale generierenden Analog/Digital-Wandlern gekoppelt sein, um diese Signale, so wie dies in Figur 6 mit Bezug auf die Bewegungssensoren 70 dargestellt ist, zum Datenauswertesystem 86 übertragen zu können.

## Patentansprüche

1. Baumaschine, umfassend:
- eine bezüglich eines Maschinenrahmens (12, 18) um eine Drehachse (D) drehbare Verdichterwalze (20),
- wenigstens einen Sensor (70, 90, 94), eine Datensendeeinheit (72) mit wenigstens einer Sendeantenne (74) und eine erste Datenübertragungsanordnung (76) zur Übertragung von Daten von dem wenigstens einen Sensor (70, 90, 94) zu der Datensendeeinheit,
- an dem Maschinenrahmen (12, 18) eine Datenempfangseinheit mit wenigstens einer Empfangsantenne (80), ein Datenauswertesystem (86) und eine zweite Datenübertragungsanordnung (84) zur Übertragung von Daten von der Datenempfangseinheit (82) zu dem Datenauswertesystem (86),
**dadurch gekennzeichnet,**
- **dass** der wenigstens eine Sensor (70, 90, 94), die Datensendeeinheit (72) und die erste Datenübertragungsanordnung (76) an der Verdichterwalze (20) vorgesehen sind,
- **dass** die Datensendeeinheit (72) wenigstens zwei Sendeantennen (74) aufweist und dass der Datensendeeinheit (72) ein Signalteiler zum Verteilen des Ausgangssignals der Datensendeeinheit (72) auf mehrere Sendeantennen (74) zugeordnet ist, derart, dass alle Sendeantennen (74) gleichzeitig und ohne Unterbrechung im Wesentlichen das gleiche Ausgangssignal senden.

2. Baumaschine nach Anspruch 1,
**dadurch gekennzeichnet, dass** die erste Datenübertragungsanordnung (76) ein erstes Datenbussystem (76) umfasst, oder/und dass die zweite Datenübertragungsanordnung (84) ein zweites Datenbussystem (84) umfasst.

3. Baumaschine nach Anspruch 2,
**dadurch gekennzeichnet, dass** das erste Datenbussystem (76) oder/und das zweite Datenbussystem (84) ein CAN-Datenbussystem umfasst.

4. Baumaschine nach einem der vorangehenden Ansprüche,
**dadurch gekennzeichnet, dass** wenigstens zwei Sendeantennen (74) oder/und wenigstens zwei Empfangsantennen (80) vorzugsweise mit einem Winkelabstand im Bereich von 90° bis 180° zueinander angeordnet sind.

5. Baumaschine nach einem der vorangehenden Ansprüche,
**dadurch gekennzeichnet, dass** eine Mehrzahl von als Bewegungssensoren (70) ausgebildeten Sensoren (70) vorzugsweise mit gleichmäßigem Winkelabstand zueinander vorgesehen ist.

6. Baumaschine nach einem der vorangehenden Ansprüche,
**dadurch gekennzeichnet, dass** wenigstens ein als Bewegungssensor (70) ausgebildeter Sensor (70) ein Beschleunigungssensor ist, oder/und dass wenigstens ein Sensor (90) ein Sensor (90) zum Bereitstellen von die Position oder/und die Bewegung einer Unwuchtmasse einer Unwucht Massenanordnung wiedergeben der Information ist, oder/und dass wenigstens ein Sensor (94) ein Temperatursensor (94) ist, oder/und die Datenempfangseinheit (82) wenigstens zwei Empfangsantennen (80) aufweist.

7. Baumaschine nach einem der vorangehenden Ansprüche,
**dadurch gekennzeichnet, dass** wenigstens ein Sensor (70, 90, 94) zur Ausgabe eines digitalen Sensorsignals ausgebildet ist.

8. Baumaschine nach einem der vorangehenden Ansprüche,
**dadurch gekennzeichnet, dass** eine Gleichspannungs-Energieversorgungsanordnung (25) zur Versorgung des wenigstens einen Sensors (70, 90, 94) und der Datensendeeinheit (72) mit elektrischer Energie vorgesehen ist.

9. Baumaschine nach einem der vorangehenden Ansprüche,
**dadurch gekennzeichnet, dass** die Gleichspannung-Energieversorgungsanordnung (25) eine Induktions-Energieübertragungsanordnung (26) zur drahtlosen Energieübertragung in den drehbaren Systembereich (20) umfasst, wobei die Induktions-Energieübertragungsanordnung (26) eine Senderanordnung (27) mit wenigstens einer Senderspule (28, 30) und an dem drehbaren Systembereich (20) eine Empfängeranordnung (32) mit wenigstens einer Empfängerspule (34) umfasst.

10. Baumaschine nach Anspruch 9,
**dadurch gekennzeichnet, dass** die Empfängeranordnung (32) eine Mehrzahl von vorzugsweise in Umfangsrichtung um die Drehachse (D) aufeinanderfolgend angeordneten Empfängerspulen (34) umfasst, oder/und dass die Senderanordnung (27) wenigstens zwei vorzugsweise in Umfangsrichtung um die Drehachse (D) auf einander folgend angeordnete Senderspulen (28, 30) umfasst.

11. Baumaschine nach Anspruch 10,
**dadurch gekennzeichnet, dass** die Induktion-Energieübertragungsanordnung (26) eine Mehrzahl von in Umfangsrichtung aufeinanderfolgenden Trägern (36) umfasst, wobei an jedem Träger (36) wenigstens eine Empfängerspule (34) vorgesehen ist, und dass an wenigstens einem Träger (36) wenigstens ein Sensor (70) vorgesehen ist oder/und an einem Träger (36) die Datensendeeinheit (72) vorgesehen ist oder/und an wenigstens einem Träger (36), vorzugsweise wenigstens zwei Trägern (36), eine Sendeantenne (74) vorgesehen ist.

## Claims

1. A construction machine, comprising:
- a compactor roller (20) rotatable about an axis of rotation (D) with respect to a machine frame (12, 28),
- at least one sensor (70, 90, 94), a data transmission unit (72) with at least one transmission antenna (74), and a first data transmission arrangement (76) for transmitting data from the at least one sensor (70, 90, 94) to the data transmission unit,
- on the machine frame (12, 18) a data receiving unit with at least one receiving antenna (80), a data evaluation system (86), and a second data transmission arrangement (84) for transmitting data from the data receiving unit (82) to the data evaluation system (86),
**characterized in that**
- the at least one sensor (70, 90, 94), the data transmitting unit (72) and the first data transmission arrangement (76) are provided on the compactor roller (20),
- the data transmission unit (72) has at least two transmission antennas (74) and **in that** a signal splitter is assigned to the data transmission unit (72) for distributing the output signal of the data transmission unit (72) to multiple transmission antennas (74) in such a way that all transmission antennas (74) transmit essentially the same output signal simultaneously and without interruption.

2. The construction machine according to claim 1,
**characterized in that** the first data transmission arrangement (76) comprises a first data bus system (76) or/and that the second data transmission arrangement (84) comprises a second data bus system (84).

3. The construction machine according to claim 2,
**characterized in that** the first data bus system (76) or/and the second data bus system (84) comprises a CAN data bus system.

4. The construction machine according to one of the preceding claims,
**characterized in that** at least two transmission antennas (74) or/and at least two receiving antennas (80) are arranged preferably at an angular distance in the range from 90° to 180° to one another.

5. The construction machine according to one of the preceding claims,
**characterized in that** a plurality of sensors (70), designed as movement sensors (70), is provided preferably at a uniform angular distance to one another.

6. The construction machine according to one of the preceding claims,
**characterized in that** at least one sensor (70), designed as a movement sensor (70), is an accelerometer, or/and that at least one sensor (90) is a sensor (90) for providing information about the position or/and the movement of an unbalanced mass of an unbalanced mass arrangement or/and that at least one sensor (94) is a temperature sensor (94), or/and the data receiving unit (82) has at least two receiving antennas (80).

7. The construction machine according to one of the preceding claims,
**characterized in that** at least one sensor (70, 90, 94) is designed for emitting a digital sensor signal.

8. The construction machine according to one of the preceding claims,
**characterized in that** a direct voltage power supply arrangement (25) is provided for supplying the at least one sensor (70, 90, 94) and the data transmission unit (72) with electrical power.

9. The construction machine according to one of the preceding claims,
**characterized in that** the direct voltage power supply arrangement (25) comprises an induction power transmission arrangement (26) for wireless power transmission into the rotatable system area (20), wherein the induction power transmission arrangement (26) comprises a transmission arrangement (27) with at least one transmission coil (28, 30) and a receiving arrangement (32) comprises at least one receiver coil (34) on the rotatable system area (20).

10. The construction machine according to claim 9,
**characterized in that** the receiving arrangement (32) comprises a plurality of receiving coils (34) arranged preferably following one another in the circumferential direction about the axis of rotation (D), or/and that the transmission arrangement (27) comprises at least two transmission coils (28, 30) arranged preferably following one another in the circumferential direction about the axis of rotation (D).

11. The construction machine according to claim 10,
**characterized in that** the induction power transmission arrangement (26) comprises a plurality of supports following one another in the circumferential direction, wherein at least one receiving coil (34) is provided on each support (36), and that at least one sensor (70) is provided on at least one support (36), or/and the data transmission unit (72) is provided on one support (36), or/and a transmission antenna (74) is provided on at least one support (36), preferably on at least two supports (36).

## Revendications

1. Une machine de construction, comprenant :
- un rouleau de compaction (20) pouvant tourner autour d'un axe de rotation (D) par rapport à un châssis de machine (12, 18),
- au moins un capteur (70, 90, 94), une unité d'émission de données (72) avec au moins une antenne d'émission (74) et un premier dispositif de transmission de données (76) pour la transmission de données dudit au moins un capteur (70, 90, 94) à l'unité d'émission de données,
- sur le châssis de machine (12, 18), une unité de réception de données avec au moins une antenne de réception (80), un système d'évaluation de données (86) et un deuxième dispositif de transmission de données (84) pour la transmission de données de l'unité de réception de données (82) au système d'évaluation de données (86),
**caractérisé, en ce que**
- ledit au moins un capteur (70, 90, 94), l'unité d'émission de données (72) et le premier dispositif de transmission de données (76) sont prévus sur le rouleau de compaction (20),
- **en ce que** l'unité d'émission de données (72) présente au moins deux antennes d'émission (74) et **en ce qu'**à l'unité d'émission de données (72) est associé un diviseur de signal pour répartir le signal de sortie de l'unité d'émission de données (72) sur plusieurs antennes d'émission (74), de telle sorte que toutes les antennes d'émission (74) émettent simultanément et sans interruption essentiellement le même signal de sortie.

2. La machine de construction selon la revendication 1,
**caractérisée en ce que** le premier dispositif de transmission de données (76) comprend un premier système de bus de données (76), ou/et **en ce que** le deuxième dispositif de transmission de données (84) comprend un deuxième système de bus de données (84).

3. La machine de construction selon la revendication 2,
**caractérisée en ce que** le premier système de bus de données (76) et/ou le deuxième système de bus de données (84) comprend un système de bus de données CAN.

4. La machine de construction selon l'une des revendications précédentes,
**caractérisé en ce qu'**au moins deux antennes d'émission (74) ou/et au moins deux antennes de réception (80) sont disposées de préférence à une distance angulaire comprise entre 90° et 180° l'une de l'autre.

5. La machine de construction selon l'une des revendications précédentes,
**caractérisée en ce qu'**une pluralité de capteurs (70) conçus comme des capteurs de mouvement (70) sont prévues, de préférence à une distance angulaire uniforme les uns par rapport aux autres.

6. La machine de construction selon l'une des revendications précédentes,
**caractérisée en ce qu'**au moins un capteur (70) conçu comme un capteur de mouvement (70), est un accéléromètre, et/ou qu'au moins un capteur (90) est un capteur (90) destiné à fournir des informations sur la position et/ou le mouvement d'une masse de balourd d'un agencement de masses de balourd et/ou qu'au moins un capteur (94) est un capteur de température (94), ou/et **en ce que** l'unité de réception de données (82) présente au moins deux antennes de réception (80).

7. La machine de construction selon l'une des revendications précédentes,
**caractérisé en ce qu'**au moins un capteur (70, 90, 94) est conçu pour émettre un signal de capteur numérique.

8. La machine de construction selon l'une des revendications précédentes,
**caractérisé en ce qu'**un dispositif d'alimentation en courant continu (25) est prévu pour alimenter en courant électrique ledit au moins un capteur (70, 90, 94) et l'unité de transmission de données (72).

9. La machine de construction selon l'une quelconque des revendications précédentes,
**caractérisé en ce que** l'agencement d'alimentation en courant continu (25) comprend un agencement de transmission d'énergie par induction (26) pour la transmission d'énergie sans fil dans la zone de système rotative (20), dans lequel l'agencement de transmission d'énergie par induction (26) comprend un agencement d'émetteur (27) avec au moins une bobine d'émetteur (28, 30) et, sur la zone de système rotative (20), un agencement de récepteur (32) avec au moins une bobine de récepteur (34).

10. La machine de construction selon la revendication 9,
**caractérisée en ce que** l'agencement de récepteur (32) comprend une pluralité de bobines de récepteur (34) disposées les unes à la suite des autres, de préférence dans la direction périphérique autour de l'axe de rotation (D), ou/et **en ce que** l'agencement d'émetteur (27) comprend au moins deux bobines d'émetteur (28, 30) disposées les unes à la suite des autres, de préférence dans la direction périphérique autour de l'axe de rotation (D).

11. La machine de construction selon la revendication 10,
**caractérisée en ce que** l'agencement de transmission d'énergie par induction (26) comprend une pluralité de supports (36) se succédant dans la direction périphérique, dans lequel au moins une bobine de récepteur (34) est prévue sur chaque support (36), et **en ce qu'**au moins un capteur (70) est prévu sur au moins un support (36) ou/et l'unité d'émission de données (72) est prévue sur un support (36) ou/et une antenne d'émission (74) est prévue sur au moins un support (36), de préférence au moins deux supports (36).
